# EUROPÄISCHE PATENTSCHRIFT

(11) **EP 2 169 288 B1**
(45) Veröffentlichungstag und Bekanntmachung des Hinweises auf die Patenterteilung: **26.01.2011**
(21) Anmeldenummer: 08405245.5
(22) Anmeldetag: 29.09.2008
(51) Int. Cl.: F16K 31/385

(54) **Servogesteuertes Ventil**
Power controlled valve
Soupape servocommandée

(43) Veröffentlichungstag der Anmeldung: 31.03.2010
(73) Patentinhaber: Geberit International AG, 8645 Jona (CH)
(72) Erfinder: Wey, Paul, 8733 Eschenbach (CH)
(74) Vertreter: Groner, Manfred

(56) Entgegenhaltungen:
- EP-A- 1 271 030
- WO-A-96/11350
- DE-A1- 2 435 256
- DE-A1- 10 315 926

## Beschreibung

Die Erfindung betrifft ein servogesteuertes Ventil nach dem Oberbegriff des Anspruchs 1.

Solche servogesteuerte Ventile sind insbesondere in der Sanitärtechnik seit langem bekannt. Sie werden beispielsweise als Spülventile für Urinale verwendet. Das Ventil kann beispielsweise pneumatisch mit einem Druckimpuls angesteuert werden. Das Pilotventil wird nicht direkt, sondern durch die Bewegung eines Permanentmagneten angesteuert. Diese indirekte Betätigung des Pilotventils ermöglicht eine vergleichsweise hohe Präzision beim Öffnen und Schliessen des Ventils. Ein solches Ventil ist im Stand der Technik durch die DE 24 35 256 bekannt geworden. Ein weiteres servogesteuertes Ventil, bei dem jedoch das zweite Schliessteil direkt pneumatisch betätigbar wird, ist aus der EP-A-0 811 795 bekannt geworden.

Bei beiden Ventilen erfolgt die Verbindung der Steuerkammer zum Einlass über einen Durchgang in einer Rollmembran, welche das erste Schliessteil bildet. Ein solcher Durchgang ist jedoch vergleichsweise verschmutzungsanfällig. Teile im Wasser können diesen Durchgang einengen oder vollständig verstopfen, so dass das Ventil nicht mehr zuverlässig oder gar nicht mehr arbeitet. Auch eine Verkalkung kann den Durchgang einengen und dadurch die Funktionsfähigkeit beeinträchtigen.

Im Stand der Technik ist auch ein Ventil bekannt, bei dem ein Stift vorgesehen ist, mit dem der genannte Durchgang in der Rollmembran selbsttätig gereinigt werden soll. Auch hier können jedoch Störungen auftreten. Eine weitere Massnahme wäre der Einbau eines Feinfilters. Ein solcher Feinfilter würde hier jedoch einen wesentlichen Widerstand gegen den Durchfluss von Wasser im Hauptkanal und eine wesentliche Erhöhung des Druckes bedingen, um eine gleiche Leistung zu erreichen. Ein Ventil mit einem Filter, mit dem zuströmendes Wasser gefiltert wird, ist durch die WO 96/11350 bekannt geworden.

Der Erfindung liegt die Aufgabe zu Grunde, ein servogesteuertes Ventil der genannten Art zu schaffen, das die genannten Nachteile vermeidet.

Die Aufgabe ist gemäss Anspruch 1 gelöst. Eine Öffnung in der Rollmembran bzw. im ersten Schliessteil kann dadurch vermieden werden. Das erfindungsgemässe Ventil ist dadurch weniger verschmutzungsanfällig, funktionssicherer und ermöglicht genauere Schliesszeiten.

Nach der Erfindung ist vorgesehen, dass vor dem weiteren Wasserkanal ein Filter angeordnet ist, in dem das dem weiteren Wasserkanal zuströmende Wasser gefiltert wird. Mit einem solchen Filter kann gezielt das Wasser gefiltert werden, das dem weiteren Wasserkanal zugeführt wird. Das Wasser, das bei geöffnetem Ventil durch dieses hindurch strömt, wird mit einem wesentlich gröberen Filter gefiltert, welches einen vergleichsweise kleinen Strömungswiderstand bildet. Das dem weiteren Wasserkanal zufliessende Wasser wird hingegen mit einem vergleichsweise feinen Filter gefiltert. Dadurch kann noch wirksamer vermieden werden, dass der Durchfluss durch den Steuerwasserkanal durch Verschmutzung behindert wird. Dadurch ergibt sich eine höhere Lebensdauer des erfindungsgemässen Ventils und noch kleinere Serviceintervalle.

Nach einer Weiterbildung der Erfindung ist vorgesehen, dass der Filter in einem Einlassstutzen des Gehäuses angeordnet ist und dass der weitere Wasserkanal in diesen Einlassstutzen mündet. Dies ermöglicht einerseits ein einfaches und schnelles Auswechseln des Filters und anderseits ein besonders geeignete Anordnung eines Feinfilters, um spezifisch das in den weiteren Wasserkanal einströmende Wasser zu filtern. Eine besonders hohe Funktionssicherheit und gleichzeitig ein effizienter Wassergebrauch ergibt sich dadurch, dass gemäss der Erfindung der Filter ein Feinfilter und einen Grobfilter aufweist und dass dem zusätzlichen Wasserkanal zuströmende Wasser zumindest durch diesen Feinfilter und das dem Hauptventilsitz zuströmende Wasser lediglich durch den Grobfilter gefiltert wird. Hierbei ist besonders vorteilhaft, wenn der Feinfilter am Umfang des Grobfilters so angeordnet ist, dass diese bei geöffnetem Ventil durchströmt und damit gereinigt wird. Dadurch ist ein sich selbstreinigender Filter möglich.

Der zusätzliche Wasserkanal ermöglicht den Einbau eines Druckregulierorgans. Dieses ist gemäss einer Weiterbildung der Erfindung vor der Steuerkammer im weiteren Wasserkanal angeordnet. Damit kann sichergestellt werden, dass der Druck einen vorbestimmten Wert, beispielsweise einen Druck von 1 bar nicht überschreitet.

Das erfindungsgemässe Ventil kann dann besonders einfach und sicher hergestellt werden, wenn gemäss einer Weiterbildung der Erfindung der weitere Wasserkanal wenigstens teilweise in einem zweiten Gehäuse verläuft, der zwischen einem ersten, den Einlass und den Auslass bildenden ersten Gehäuseteil und einem dritten, die Magnetkammer bildenden Gehäuseteil angeordnet ist. Dieser zweite Gehäuseteil weist bevorzugt auch das genannte Druckregulierorgan auf. Weiter kann dieser zweite Gehäuseteil den Sitz des Pilotventils, die Pilotöffnung und die Durchgänge zur Steuerkammer und zum Auslass wenigstens teilweise enthalten. Dieses zweite Gehäuse ist vorzugsweise mit einem Wulst einer Rollmembran gegenüber dem ersten Gehäuseteil abgedichtet. Nach einer Weiterbildung der Erfindung erstreckt sich der weitere Wasserkanal durch diesen Wulst vom ersten Gehäuseteil in den zweiten Gehäuseteil. Mit der Wulst der Rollmembran kann dann gleichzeitig der weitere Wasserkanal beim Übergang vom ersten Gehäuseteil in den zweiten Gehäuseteil abgedichtet werden. Vorzugsweise ist auch ein Durchgang in den Auslass mit diesem Wulst abgedichtet. Zusätzliche Dichtungsmittel können damit vermieden werden.

Nach einer Weiterbildung der Erfindung ist der zweite Gehäuseteil auf einer Seite vom ersten Schliessteil und auf einer zweiten Seite vom zweiten Schliessteil beaufschlagbar. Dies ist damit konstruktiv besonders günstig.

Nach einer Weiterbildung der Erfindung ist der Permanentmagnet kolbenförmig ausgebildet und zentral in der Magnetkammer angeordnet. Ein solcher Magnet erfordert weniger Raum und kann einfacher hergestellt werden als die bisher üblichen Ringmagnete. Das Ventil ist dann besonders funktionssicher, wenn gemäss einer Weiterbildung der Erfindung die Magnetkammer eine Vertiefung aufweist, in welcher der Permanentmagnet bei einer Betätigung eintaucht.

Weitere vorteilhafte Merkmale ergeben sich aus den abhängigen Patenansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 ein Schnitt durch ein erfindungsgemässes Ventil, wobei dieses geschlossen ist und
Figur 2 ein Schnitt gemäss Figur 1, wobei jedoch das Ventil geöffnet ist.

Das Ventil 1 besitzt ein Gehäuse 2, das einen ersten Gehäuseteil 3, einen zweiten Gehäuseteil 4, einen dritten Gehäuseteil 5 und einen vierten Gehäuseteil 6 aufweist. Diese Gehäuseteile sind mit hier nicht gezeigten Befestigungsmitteln, beispielsweise Schrauben oder Rastelementen miteinander verbunden. Der erste Gehäuseteil 3 besitzt einen Einlass 7, der durch einen Stutzen 42 gebildet ist, der an eine hier nicht gezeigte Druckwasserleitung anschliessbar ist. Am ersten Gehäuseteil 3 ist zudem ein Rohrteil 43 angeformt, der einen Auslass 8 besitzt und der beispielsweise an eine hier nicht gezeigte Spülleitung eines Urinals anschliessbar ist. Bei geöffnetem Ventil strömt das Wasser in Richtung des Pfeils 16 durch diesen Rohrteil 43. Am dritten Gehäuseteil 5 ist ein Anschlussstutzen 37 angeformt, an dem das Ventil 1 mit einer hier nicht gezeigten vorzugsweise pneumatischen Betätigungsvorrichtung verbindbar ist. Die Betätigungsvorrichtung kann beispielsweise als eine Fuss- oder Handbetätigung vorgesehen sein und eine Taste aufweisen, mit der ein Luftimpuls ausgeübt werden kann. Grundsätzlich ist aber auch eine andere Betätigung, beispielsweise eine mechanische Betätigung möglich.

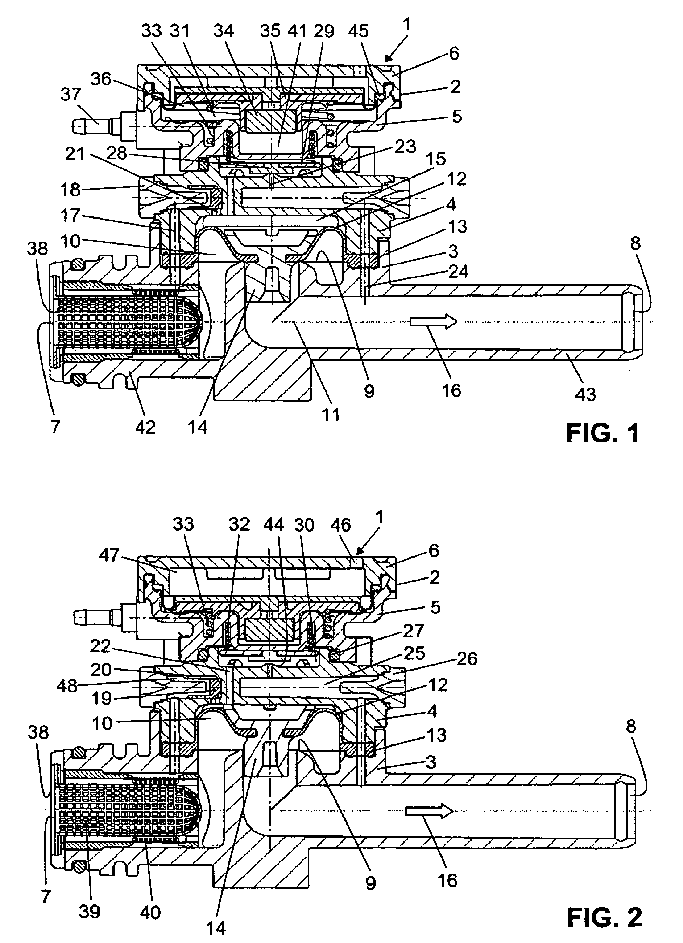

In den Stutzen 42 ist ein Filter 38 eingesetzt, der aus einem Grobfilter 39 und einem Feinfilter 40 besteht. Der Feinfilter 40 ist hülsenförmig ausgebildet und umgibt den Grobfilter 39. Nach dem Filter 38 ist eine Einströmkammer 10 angeordnet, die bei geöffnetem Ventil gemäss Figur 2 mit einem Durchlass 11 des Rohrteils 43 verbunden ist. Bei geöffnetem Ventil strömt Wasser aus der genannten Druckwasserleitung vom Einlass 7 durch den Grobfilter 39 in die Einströmkammer 10 und schliesslich zum Auslass 11. In der Einströmkammer 10 befindet sich ein Ventilsitz 9, der in Figur 1 mit einem Schliessteil 14 verschlossen ist. Dieser Schliessteil 14 besitzt eine Membran 12, die insbesondere als Rollmembran ausgebildet ist und einen Ringwulst 13 besitzt, der ringförmig ausgebildet ist und welcher den ersten Gehäuseteil 3 gegenüber dem zweiten Gehäuseteil 4 abdichtet. Der Verschlusskörper 14 bildet mit dem zweiten Gehäuseteil 4 eine Steuerkammer 15. Die Steuerkammer 15 ist über einen Wasserkanal 17 mit dem Einlass 7 verbunden. Die Steuerkammer 15 ist einerseits über einen Durchgang 22 im zweiten Gehäuseteil 4 mit einer Pilotventilkammer 30 und über einen Wasserkanal 17 mit dem Einlass 7 verbunden. In der Pilotventilkammer 30 ist ein zweites Schliessteil 28 angeordnet, das mit einem Hilfsventilsitz 44 (Figur 2) zusammenarbeitet. Bei geöffnetem Pilotventil, wie dies in Figur 2 gezeigt ist, ist die Pilotventilkammer 30 über eine Pilotöffnung 23 und eine Ausnehmung 25 mit einem Durchgang 24 verbunden, der in den Rohrteil 43 führt. Das zweite Schliessteil 28 besitzt einen scheibenförmigen magnetischen Anker 29, der mittels einer Druckfeder 32 gegen den Ventilsitz 44 gespannt ist. Über dem Anker 29 ist eine Magnetkammer 31 angeordnet, die mittig eine Vertiefung 41 besitzt, in welche ein Permanentmagnet 34 eintauchen kann. Das Eintauchen erfolgt gegen die rückwirkende Kraft eines Federelementes 33. Der Permanentmagnet 34 ist an der Unterseite eines Halters 35 befestigt, der an einer Membran 36 angeordnet ist, die eine Rollmembran bildet und die mit einem Wulst 45 den dritten Gehäuseteil 5 gegenüber einem vierten Gehäuseteil 6 abdichtet.

Nachfolgend wird die Funktionsweise des Ventils 1 näher erläutert. Um das Ventil 1 zu öffnen, wird die genannten Betätigungsvorrichtung beispielsweise durch Drücken einer Taste betätigt. Hierbei wird in der Magnetkammer 31 pulsartig ein Unterdruck erzeugt. Durch diesen bewegt sich der Permanentmagnet 34 nach unten in die Vertiefung 41 und nähert sich dadurch dem Anker 29. Aufgrund der dadurch auf den Anker 29 ausgeübten magnetischen Kraft wird dieser in der Figur 1 gegen den Druck der Feder 32 nach oben bewegt. Damit wird das zweite Schliessteil 28 vom Ventilsitz 44 abgehoben. Die Pilotöffnung 23 ist damit frei. Wasser strömt nun aus der Steuerkammer 15 durch den Durchgang 22 in die Pilotventilkammer 30 und von dieser durch die Pilotöffnung 23 und die Ausnehmung 25 in den Durchgang 24 und damit in den Rohrteil 43. Dies hat zur Folge, dass der Druck in der Steuerkammer 15 sofort und wesentlich kleiner wird. Aufgrund des weiterhin bestehenden Wasserdruckes in der Einströmkammer 10 wird das Schliessteil 14 nach oben und damit weg vom Ventilsitz 9 bewegt. Schliesslich wird der zweite Gehäuseteil 4 gemäss Figur 2 von diesem Schliessteil 14 beaufschlagt. Bei der genannten Bewegung des Permanentmagneten 34 strömt über eine Öffnung 46 des vierten Gehäuseteils 6 Luft in eine Kammer 47, die sich über einem Halter 35 bzw. der Membran 36 befindet. In dieser Öffnung 46 kann eine hier nicht gezeigte Düse mit einem definierten Durchlasskanal eingesetzt sein welche die Schliesszeit bestimmt. Durch die Kraft der Feder wird der Halter 35 nach oben gespannt und dadurch strömt Luft der Kammer 47 durch die Öffnung und die nachgeschaltete Düse nach aussen. Der Permanentmagnet 34 wandert dadurch nach oben und damit vom Anker 29 weg. Entsprechend wird die magnetischen Kraft des Permanentmagneten 34 auf den Anker stetig kleiner. Unterschreitet diese Kraft eine bestimmte Grösse, so bewegt die Feder 32 das zweite Schliessteil 28 nach unten bis die Pilotöffnung 23 verschlossen ist.

Die Pilotöffnung 23 ist nun verschlossen. Da die Steuerkammer 15 weiterhin über den Wasserkanal 17 mit dem Einlass 7 und damit mit der Druckwasserleitung verbunden ist, erhöht sich der Wasserdruck in der Steuerkammer 15. Das Schliessteil 14 wird nun aufgrund dieses Wasserdruckes in die in Figur 1 gezeigte Stellung bewegt, in welcher nun der Ventilsitz 9 verschlossen ist. Da die beaufschlagte Fläche an der Oberseite des Schliessteils 14 grösser ist als auf der Unterseite, wirkt auf das Schliessteil 14 eine Kraft, welcher dieses in der Schliessposition hält.

Bei der Bewegung des Schliessteils 14 in die Schliessstellung strömt durch den Wasserkanal 17 Wasser in die Steuerkammer 15. Der Druck ist hierbei mit einem Druckregulierstopfen 18 oder einer anderen geeigneten Regulierorgan geregelt. Der Druckregulierstopfen 18 ist wie ersichtlich in eine Bohrung 48 des zweiten Gehäuseteils 4 eingesetzt, beispielsweise eingeschraubt. In die Bohrung 48 ist ein Einsatz 19 eingesetzt, der am Umfang einen Durchgang 20 aufweist, welcher die Bohrung 48 mit einer Bohrung 21 verbindet, welche in die Steuerkammer 15 mündet. Der Druckregulierstopfen 18 ist auswechselbar.

Das in den Wasserkanal 17 einströmende Wasser ist vom Grobfilter 39 als auch vom Feinfilter 40 gefiltert, so dass keine festen Bestandteile über einer bestimmten Grösse durch den Wasserkanal 17 ins Gehäuse 2 gelangen können. Bei geöffnetem Ventil wird das in die Einströmkammer 10 strömende Wasser durch den Feinfilter 40 nicht behindert. Der Strömungswiderstand des Grobfilters 39 ist wesentlich kleiner als derjenige des Feinfilters 40, da seine Öffnungen wesentlich grösser sind. Da in der Einströmkammer 10 und auch im Rohrteil 43 keine vergleichsweise engen Durchgänge und Kanäle vorhanden sind, können hier auch feine Bestandteile und Verschmutzungen ungehindert durchtreten und den Rohrteil 43 durch die Öffnung 8 verlassen. Wesentlich ist hierbei, dass die Membran 12 geschlossen ist und keinen Durchgang aufweisen, der durch solche festen Bestandteile verschlossen werden könnte. Eine solche Öffnung ist hier nicht erforderlich, da die Steuerkammer 15 über den zusätzlichen Wasserkanal 17 mit dem Einlass 7 verbunden ist.

Beim erfindungsgemässen Ventil 1 kann über eine vergleichsweise lange Benutzungsdauer eine genau einstellbare und konstante Öffnungszeit gewährleistet werden. Dadurch ist über den entsprechenden Zeitraum eine optimale Spülung beispielsweise eines Urinals gewährleistet. Dies ermöglicht schliesslich einen besonders sparsamen und optimalen Gebrauch des Spülwassers. Das Ventil 1 eignet sich insbesondere als Spülventil für eine sanitäre Einrichtung, beispielsweise ein Urinal oder ein WC, es sind jedoch auch andere Anwendungen denkbar.

### Bezugszeichenliste

- 1: Ventil
- 2: Gehäuse
- 3: Erster Gehäuseteil
- 4: Zweiter Gehäuseteil
- 5: Dritter Gehäuseteil
- 6: Vierter Gehäuseteil
- 7: Einlass
- 8: Auslass
- 9: Ventilsitz
- 10: Einströmkammer
- 11: Durchlass
- 12: Membran
- 13: Wulst
- 14: Schliessteil
- 15: Steuerkammer
- 16: Pfeil
- 17: Wasserkanal
- 18: Druckregulierstopfen
- 19: Einsatz
- 20: Durchgang
- 21: Bohrung
- 22: Durchgang
- 23: Pilotöffnung
- 24: Durchgang
- 25: Ausnehmung
- 26: Stopfen
- 27: Dichtungsring
- 28: Schliessteil
- 29: Anker
- 30: Pilotventilkammer
- 31: Magnetkammer
- 32: Feder
- 33: Feder
- 34: Permanentmagnet
- 35: Halter
- 36: Membran
- 37: Anschlussstutzen
- 38: Filter
- 39: Grobfilter
- 40: Feinfilter
- 41: Vertiefung
- 42: Stutzen
- 43: Rohrteil
- 44: Hilfsventilsitz
- 45: Wulst
- 46: Öffnung
- 47: Kammer
- 48: Bohrung

## Patentansprüche

1. Servogesteuertes Ventil, mit einem Gehäuse (2), das zwischen einem Einlass (7) und einem Auslass (8) einen Hauptventilsitz (9) aufweist, der durch ein erstes Schliessteil (14) verschliessbar ist, das mit einer dem Hauptventilsitz (9) abgewendeten Seite eine Wand einer Steuerkammer (15) bildet, mit einem Pilotventil (28, 44), das in einer Pilotventilkammer (30) einen Hilfsventilsitz (44) aufweist, der mit einem zweiten Schliessteil (28) verschliessbar ist, wobei dieses zweite Schliessteil (28) einen Anker (29) aufweist, der in der Pilotventilkammer (30) angeordnet ist, mit einem die Steuerkammer (15) mit der Pilotventilkammer (30) verbindenden Steuerwasserkanal (22) sowie einem die Steuerkammer (15) mit dem Einlass (7) verbindenden weiteren Wasserkanal (17) und mit einem in einer Magnetkammer (31) angeordnetem Permanentmagneten (34), mit dem das zweite Schliessteil (28) gegen die rückwirkende Kraft einer Feder (32) vom Hilfsventilsitz (44) abhebbar ist, so dass der Druck in der Steuerkammer (15) sinkt und sich das erste Schliessteil (14) vom Hauptventilsitz (9) abhebt, wobei der weitere Wasserkanal (17) im Gehäuse (2) verläuft, **dadurch gekennzeichnet, dass** in Strömungsrichtung gesehen vor dem weiteren Wasserkanal (17) ein Filter (38) angeordnet ist, in dem das dem weiteren Wasserkanal (7) zuströmende Wasser gefiltert wird und dass der Filter (38) einen Feinfilter (40) und einen Grobfilter (39) aufweist und dass das in den weiteren Wasserkanal (17) zuströmende Wasser zumindest durch diesen Feinfilter (40) und das dem Hauptventilsitz (9) über eine Einströmkammer (10) zuströmende Wasser lediglich durch den Grobfilter (39) gefiltert wird.

2. Ventil nach Anspruch 1, **dadurch gekennzeichnet, dass** der Filter (38) in einem Einlassstutzen (42) des Gehäuses (2) angeordnet ist und dass der weitere Wasserkanal (17) in diesen Einlassstutzen (42) mündet.

3. Ventil nach Anspruch 1 oder 2, **dadurch gekennzeichnet, dass** im weiteren Wasserkanal (17) ein Druckregulierorgan (18) angeordnet ist.

4. Ventil nach einem der Ansprüche 1 bis 3, **dadurch gekennzeichnet, dass** der weitere Wasserkanal (17) wenigstens teilweise in einem zweiten Gehäuseteil (4) angeordnet ist, der zwischen einem ersten den Einlass (7) und den Auslass (8) bildenden Gehäuseteil (3) und einen dritten, die Magnetkammer (31) bildenden Gehäuseteil (5) angeordnet ist.

5. Ventil nach Anspruch 4, **dadurch gekennzeichnet, dass** der zweite Gehäuseteil (4) den Hilfsventilsitz (44) und die Pilotöffnung (23) bildet.

6. Ventil nach Anspruch 4 oder 5, **dadurch gekennzeichnet, dass** der zweite Gehäuseteil (4) mit einer das erste Schliessteil (14) bildenden Rollmembran (12) gegenüber dem ersten Gehäuseteil (3) abgedichtet ist.

7. Ventil nach Anspruch 6, **dadurch gekennzeichnet, dass** der zweite Gehäuseteil (4) mit der Rollmembran (12) die genannte Steuerkammer (15) bildet.

8. Ventil nach einem der Ansprüche 4 bis 7, **dadurch gekennzeichnet, dass** der dritte Gehäuseteil (5) einen Anschlussstutzen (37) für den Anschluss an eine beispielsweise pneumatische Leitung aufweist.

9. Ventil nach einem der Ansprüche 4 bis 8, **dadurch gekennzeichnet, dass** der zweite Gehäuseteil (4) auf einer Seite vom ersten Schliessteil (14) und auf einer zweiten Seite vom zweiten Schliessteil (28) beaufschlagbar ist.

10. Ventil nach einem der Ansprüche 1 bis 9, **dadurch gekennzeichnet, dass** der Permanentmagnet (34) kolbenförmig ausgebildet ist.

11. Ventil nach Anspruch 10, **dadurch gekennzeichnet, dass** der Permanentmagnet (34) zentral in der Magnetkammer (31) angeordnet ist.

12. Ventil nach einem der Ansprüche 1 bis 11, **dadurch gekennzeichnet, dass** die Magnetkammer (31) eine Vertiefung (41) aufweist, in welche der Permanentmagnet (34) einer Betätigung eintaucht.

13. Ventil nach einem der Ansprüche 1 bis 12, **dadurch gekennzeichnet, dass** es ein Spülventil für eine sanitäre Anlage ist.

## Claims

1. Servo-controlled valve, with a housing (2) which has, between an inlet (7) and an outlet (8), a main valve seat (9) closable by means of a first closing part (14) which, with a side facing away from the main valve seat (9), forms a wall of a control chamber (15), with a pilot valve (28, 44) which has in a pilot-valve chamber (30) an auxiliary valve seat (44) closable by means of a second closing part (28), this second closing part (28) having an armature (29) which is arranged in the pilot-valve chamber (30), with a control-water duct (22) connecting the control chamber (15) to the pilot-valve chamber (30), and with a further water duct (17) connecting the control chamber (15) to the inlet (7), and with a permanent magnet (34) which is arranged in a magnet chamber (31) and by means of which the second closing part (28) can be lifted off from the auxiliary valve seat (44) counter to the reacting force of a spring (32), so that the pressure in the control chamber (15) falls and the first closing part (14) lifts off from the main valve seat (9), the further water duct (17) running in the housing (2), **characterized in that** a filter (38), in which the water flowing to the further water duct (7) is filtered, is arranged upstream of the further water duct (17), as seen in the direction of flow, and **in that** the filter (38) has a fine filter (40) and a coarse filter (39), and **in that** the water flowing into the further water duct (17) is filtered at least by this fine filter (40) and the water flowing to the main valve seat (9) via an inflow chamber (10) is filtered solely by the coarse filter (39).

2. Valve according to Claim 1, **characterized in that** the filter (38) is arranged in an inlet connection piece (42) of the housing (2), and **in that** the further water duct (17) issues into this inlet connection piece (42).

3. Valve according to Claim 1 or 2, **characterized in that** a pressure-regulating member (18) is arranged in the further water duct (17).

4. Valve according to one of Claims 1 to 3, **characterized in that** the further water duct (17) is arranged at least partially in a second housing part (4) which is arranged between a first housing part (3), forming the inlet (7) and the outlet (8), and a third housing part (5), forming the magnet chamber (31).

5. Valve according to Claim 4, **characterized in that** the second housing part (4) forms the auxiliary valve seat (44) and the pilot orifice (23).

6. Valve according to Claim 4 or 5, **characterized in that** the second housing part (4) is sealed off with respect to the first housing part (3) by means of a roll diaphragm (12) forming the first closing part (14).

7. Valve according to Claim 6, **characterized in that** the second housing part (4) forms with the roll diaphragm (12) the said control chamber (15).

8. Valve according to one of Claims 4 to 7, **characterized in that** the third housing part (5) has a junction piece (37) for joining to a, for example, pneumatic line.

9. Valve according to one of Claims 4 to 8, **characterized in that** the second housing part (4) can be acted upon on one side by the first closing part (14) and on a second side by means of the second closing part (28).

10. Valve according to one of Claims 1 to 9, **characterized in that** the permanent magnet (34) has a piston-shaped design.

11. Valve according to Claim 10, **characterized in that** the permanent magnet (34) is arranged centrally in the magnet chamber (31).

12. Valve according to one of Claims 1 to 11, **characterized in that** the magnet chamber (31) has a depression (41) into which the permanent magnet (34) penetrates in the event of actuation.

13. Valve according to one of Claims 1 to 12, **characterized in that** it is a flushing valve for a sanitary installation.

## Revendications

1. Soupape servo-commandée, avec un corps (2) qui présente, entre une entrée (7) et une sortie (8), un siège de soupape principal (9) qui peut être fermé par une première pièce de fermeture (14), laquelle forme avec un côté situé à l'opposé du siège de soupape principal (9) une paroi d'une chambre de commande (15), avec une soupape pilote (28, 44) qui présente, dans une chambre de soupape pilote (30), un siège de soupape auxiliaire (44) qui peut être fermé par une deuxième pièce de fermeture (28), dans laquelle cette deuxième pièce de fermeture (28) présente un induit (29) qui est disposé dans la chambre de soupape pilote (30), avec un canal hydraulique de commande (22) reliant la chambre de commande (15) à la chambre de soupape pilote (30) ainsi qu'avec un autre canal hydraulique (17) reliant la chambre de commande (15) à l'entrée (7) et avec un aimant permanent (34) disposé dans une chambre d'aimant (31), avec lequel la deuxième pièce de fermeture (28) peut être soulevée du siège de soupape auxiliaire (44) contre la force de rappel d'un ressort (32), de telle manière que la pression baisse dans la chambre de commande (15) et que la première pièce de fermeture (14) se soulève du siège de soupape principal (9), dans laquelle l'autre canal hydraulique (17) s'étend dans le corps (2), **caractérisée en ce que**, en amont de l'autre canal hydraulique (17) en considérant le sens de l'écoulement, est disposé un filtre (38) dans lequel l'eau arrivant dans l'autre canal hydraulique (17) est filtrée et **en ce que** le filtre (38) présente un filtre fin (40) et un filtre grossier (39), et **en ce que** l'eau arrivant dans l'autre canal hydraulique (17) est filtrée au moins par ce filtre fin (40) et l'eau arrivant au siège de soupape principal (9) via une chambre d'arrivée (10) est filtrée uniquement par le filtre grossier (39).

2. Soupape selon la revendication 1, **caractérisée en ce que** le filtre (38) est disposé dans une tubulure d'entrée (42) du corps (2) et **en ce que** l'autre canal hydraulique (17) débouche dans cette tubulure d'entrée (42).

3. Soupape selon la revendication 1 ou 2, **caractérisée en ce qu'**un organe de régulation de la pression (18) est disposé dans l'autre canal hydraulique (17).

4. Soupape selon l'une quelconque des revendications 1 à 3, **caractérisée en ce que** l'autre canal hydraulique (17) est disposé au moins partiellement dans une deuxième partie de corps (4), qui est disposée entre une première partie de corps (3) formant l'entrée (7) et la sortie (8) et une troisième partie de corps (5) formant la chambre d'aimant (31).

5. Soupape selon la revendication 4, **caractérisée en ce que** la deuxième partie de corps (4) forme le siège de soupape auxiliaire (44) et l'ouverture pilote (23).

6. Soupape selon la revendication 4 ou 5, **caractérisée en ce que** la deuxième partie de corps (4) est rendue étanche par rapport à la première partie de corps (3) avec une membrane roulante (12) formant la première pièce de fermeture (14).

7. Soupape selon la revendication 6, **caractérisée en ce que** la deuxième partie de corps (4) forme avec la membrane roulante (12) ladite chambre de commande (15).

8. Soupape selon l'une quelconque des revendications 4 à 7, **caractérisée en ce que** la troisième partie de corps (5) présente une tubulure de raccordement (37) pour le raccordement à une conduite par exemple pneumatique.

9. Soupape selon l'une quelconque des revendications 4 à 8, **caractérisée en ce que** la deuxième partie de corps (4) peut être sollicitée sur un côté par la première pièce de fermeture (14) et sur un deuxième côté par la deuxième pièce de fermeture (28).

10. Soupape selon l'une quelconque des revendications 1 à 9, **caractérisée en ce que** l'aimant permanent (34) est réalisé en forme de piston.

11. Soupape selon la revendication 10, **caractérisée en ce que** l'aimant permanent (34) est disposé au centre dans la chambre d'aimant (31).

12. Soupape selon l'une quelconque des revendications 1 à 11, **caractérisée en ce que** la chambre d'aimant (31) présente un creux (41), dans lequel l'aimant permanent (34) plonge lors d'un actionnement.

13. Soupape selon l'une quelconque des revendications 1 à 12, **caractérisée en ce qu'**elle constitue une soupape de chasse pour une installation sanitaire.
